# EUROPEAN PATENT APPLICATION

(11) **EP 4 439 836 A1**
(43) Date of publication of application: **02.10.2024**
(21) Application number: 23187380.3
(22) Date of filing: 24.07.2023
(51) Int. Cl.: H01M 50/262, H01M 50/209, H01M 50/258

(54) **STACKED POWER SUPPLY MODULES**

(30) Priority: 28.03.2023 CN 202320644845 U
(71) Applicant: Sungrow Energy Storage Technology Co., Ltd., Hefei, Anhui 230088 (CN)
(72) Inventor: JI, Kepeng, Hefei (CN); HUANG, Shuqiang, Hefei (CN); SU, Jinguo, Hefei (CN)
(74) Representative: Zacco Norway AS

(57) **Abstract**

A stacked power supply modules is provided. At least two power supply modules are stacked, and two adjacent power supply modules are limited and/or fixed in at least one direction through a corresponding first structural member. Furthermore, the power supply modules are limited and fixed in three directions by the first structural member together with a second structural member, thereby enabling the locking of the stacked power supply modules in the three directions after the installation and avoiding displacement after the installation.

## Description

### CROSS REFERENCE OF RELATED DISCLOSURE

The present application claims priority to Chinese Patent Application No. 202320644845.9, titled "POWER CABINET", filed on March 28, 2023 with the China National Intellectual Property Administration, which is incorporated herein by reference in its entirety

### FIELD

The present application relates to the technical field of energy storage, and in particular to a stacked power supply modules.

### BACKGROUND

Power supply modules are usually stacked vertically or horizontally. Since the power supply modules are electrically connected by means of hot-plugging, due to the influence of an external force, relative displacement inevitably occurs between the power supply modules during the stacking process and post-installation, which in turn leads to arcing or toppling. Therefore, it is required to limit or fix the power supply modules.

In the conventional fixing method, each power supply module needs to be fixed after the installation, which results in a complex fixing structure of the power supply modules and a cumbersome installation process.

### SUMMARY

In view of the above, a stacked power supply modules is provided according to the present application, to solve the problems of complex fixing structure of power supply modules and cumbersome installation process in the conventional technology.

In order to achieve the above object, the following technical solutions are provided according to the present application.

A stacked power supply modules is provided according to the present application. The stacked power supply modules includes: at least two power supply modules, at least one first structural member and at least one second structural member, where
the at least two power supply modules are stacked;
two adjacent power supply modules are limited and/or fixed in at least one direction through the corresponding first structural members;
the at least two power supply modules are limited and/or fixed in at least one other direction through the second structural members; and
the at least two power supply modules are limited and/or fixed in three directions through the first structural members together with the second structural members.

In an embodiment, each of the first structural members includes a concave-convex matched fitting structure or a shaft-hole matched fitting structure.

In an embodiment, a part, provided on a corresponding one of the power supply modules, of each of the first structural members is in an integral structure with the power supply module or in a discrete structure interconnected with the power supply module.

In an embodiment, a part, provided on the power supply module, of each of the first structural members includes a lifting member.

In an embodiment, the at least two power supply modules share all the second structural members;
the at least two power supply modules are divided in groups and the power supply modules in one group share a corresponding second structural members; or
each of the at least two power supply modules is provided with a corresponding second structural member.

In an embodiment, in a case that the at least two power supply modules share the second structural members, the second structural members are provided at one end or both ends of the power supply modules in a stacking direction, and/or,

the second structural members are provided on an outermost or second outermost power supply module of the at least two power supply modules in a stacking direction.

In an embodiment, each of the second structural members is in an integral structure with a corresponding power supply module or in a discrete structure interconnected with the power supply module.

In an embodiment, the other end of each of the second structural members is mechanically connected to a support structure; and
the support structure is an external structural member or a wall.

In an embodiment, electrical connection between the at least two power supply modules includes: connection for electric energy flow and connection for signal flow;
the electrical connection between the at least two power supply modules is realized by means of hot-plugging or cold-plugging; and
the electrical connection between the at least two power supply modules is a sequential connection or a spanning connection.

In an embodiment, the at least two power supply modules are stacked in a vertical or horizontal direction.

The at least two power supply modules are stacked according to the present application, and two adjacent power supply modules are limited and/or fixed in at least one direction through a corresponding first structural members, which in turn reduces the relative displacement between the power supply modules in a corresponding direction during installation, reduces the risk of arcing or tipping, improves safety while reduces the installation steps and reduces the complexity of a fixing structure. Furthermore, the power supply modules are limited and fixed in three directions by the first structural member together with the second structural member, thereby enabling the securing and fixation of the stacked power supply modules in the three directions after the installation and avoiding displacement after the installation.

### BRIEF DESCRIPTION OF THE DRAWINGS

For more clearly illustrating the technical solutions in the embodiments of the present application or in the conventional technology, the accompanying drawings used in the description of the embodiments or the conventional technology will be briefly described hereinafter. Apparently, the accompanying drawings described hereafter illustrate only embodiments of the present application, and other drawings can be obtained by those skilled in the art based on the provided drawings without any creative efforts.
FIG 1 is a schematic structural view of a stacked power supply modules according to an embodiment of the present application;
FIG 2 is a front view of a stacked power supply modules according to an embodiment of the present application;
FIG 3 is a top view of a stacked power supply modules according to an embodiment of the present application;
FIG 4 is a right view of a stacked power supply modules according to an embodiment of the present application;
FIG 5 is a schematic structural view of a stacked power supply modules according to another embodiment of the present application;
FIG 6 is a schematic structural view of a stacked power supply modules according to yet another embodiment of the present application;
FIG 7 is views of the stacked power supply modules shown in FIGS. 5 to 6 in all perspectives
FIG 8 is a cross-sectional view of the stacked power supply modules shown in FIGS. 1 to 4;
FIG 9 is a schematic structural view of power supply modules in the stacked power supply modules shown in FIGS. 1 to 4;
FIG 10 is another schematic structural view of power supply modules in the stacked power supply modules shown in FIGS. 1 to 4;
FIG 11 is a front view of power supply modules in the stacked power supply modules shown in FIGS. 1 to 4;
FIG 12 is a top view of power supply modules in the stacked power supply modules shown in FIGS. 1 to 4;
FIG 13 is a right view of power supply modules in the stacked power supply modules shown in FIGS. 1 to 4; and
FIG 14 is a bottom view of power supply modules in the stacked power supply modules shown in FIGS. 1 to 4.

### DETAILED DESCRIPTION OF THE EMBODIMENTS

The technical solutions according to the embodiments of the present application will be described clearly and completely as follows in conjunction with the drawings in the embodiments of the present application. It is apparent that the described embodiments are only a part of the embodiments according to the present application, rather than all of the embodiments. All other embodiments obtained by those skilled in the art without creative efforts based on the embodiments of the present application shall fall within the protection scope of the present application.

In the present application, terms such as "comprise", "include", or any other variation thereof are intended to cover non-exclusive inclusion, such that a process, a method, article, or device that includes a series of elements not only includes the series of elements, but also other elements not explicitly listed, or also includes elements inherent in such a process, method, article, or device. Without further limitations, an element limited by the statement "comprise a..." does not exclude the existence of other identical element in the process, method, article, or device that includes the element.

A stacked power supply modules is provided according to the present application, to solve the problems of the complex fixing structure of power supply modules and the cumbersome installation process in the conventional technology.

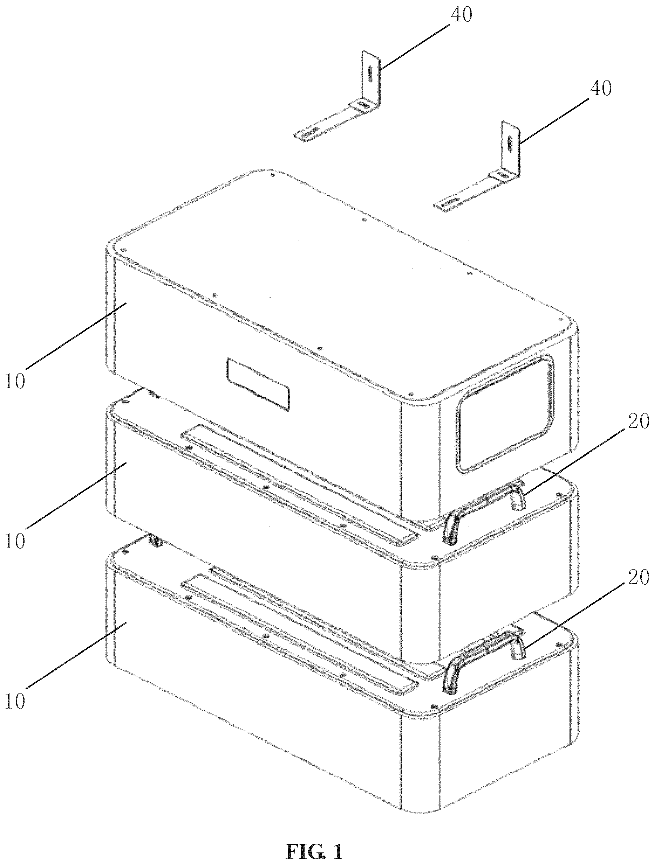

Referring to FIG 1, the stacked power supply modules includes: at least two power supply modules 10, one or more first structural members 20 and one or more second structural members 40.

Each of the power supply modules 10 is a minimum power supply unit, which can be configured to perform the function of power supply storage and charging and discharging, such as battery packs.

The power supply modules 10 are stacked, and the number of the power supply modules 10 is at least two. In actual application, the power supply modules 10 may be stacked in a vertical direction (as shown in FIG. 1) or horizontal direction (not illustrated), which is not limited here, depends on specific application situations, and falls within the scope of protection of the present application.

Furthermore, two adjacent power supply modules 10 are limited and/or fixed in at least one direction with each other through a corresponding first structural member 20. In actual application, two adjacent power supply modules 10 may be limited and/or fixed in one or two directions through the corresponding first structural member 20, such as the X and/or Y directions of a three-dimensional coordinate system, i.e., at least one of a front-to-back direction and a left-to-right direction shown in FIG 1, which is not limited here, depends on specific application situations, and falls within the scope of protection of the present application.

The power supply modules 10 are limited and/or fixed in at least one another direction through the second structural members 40, such as the Z-direction of the three-dimensional coordinate system, i.e., the vertical direction shown in FIG 1. In actual application, no matter how many directions that the first structural members 20 and the second structural members 40 each implement the limitation and/or fixation of the power supply modules 10 in, respectively, the locking of the stacked power supply modules in all directions can be ensured, as long as the power supply modules 10 are limited and/or fixed in three directions through the first structural members 20 together with the second structural members 40.

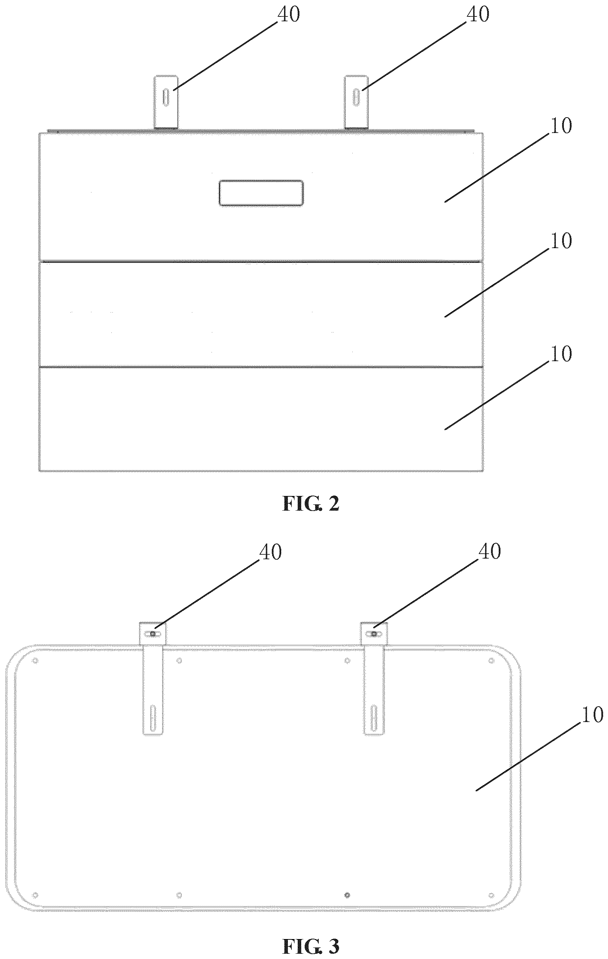

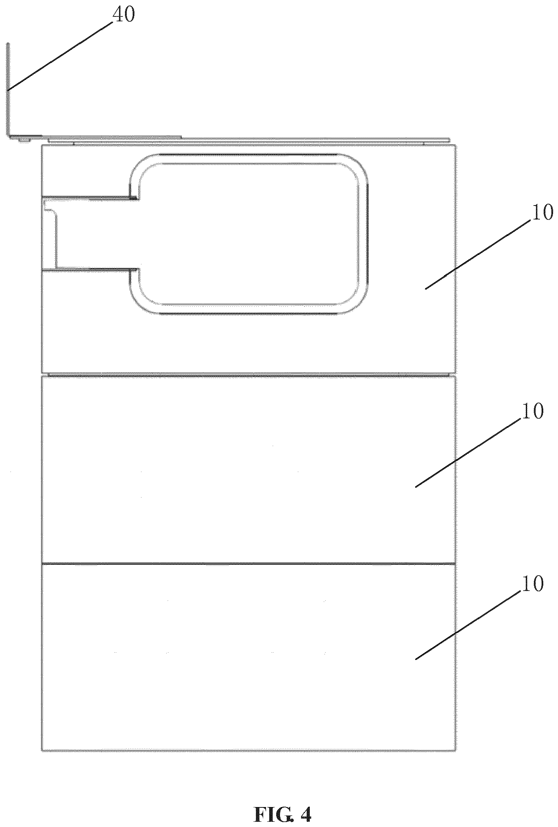

FIG 1 shows an example in which the power supply modules 10 are vertically stacked, FIG. 2 is a front view of the power supply modules 10, FIG 3 is a top view of the power supply modules 10, and FIG 4 is a right view of the power supply modules 10.

That is, the stacked power supply modules includes multiple power supply modules 10 and two structural members for limiting and fixing, the power supply modules 10 are placed in a stacking direction, two adjacent power supply modules 10 are limited and/or fixed in at least one direction through the corresponding first structural member 20, and all of the power supply modules 10 are limited and/or fixed through the second structural members 40.

During installation, the stacked power supply modules is firstly stacked quickly by means of the structural members, (i.e., the first structural member 20) provided on the power supply modules 10 for limiting and/or fixing in at least one direction. Then, after the last power supply module 10 has been stacked, the entire stacked power supply modules is secured and fixed by means of the second structural members 40, thereby realizing the secure fixation and easy installation through the second structural members 40.

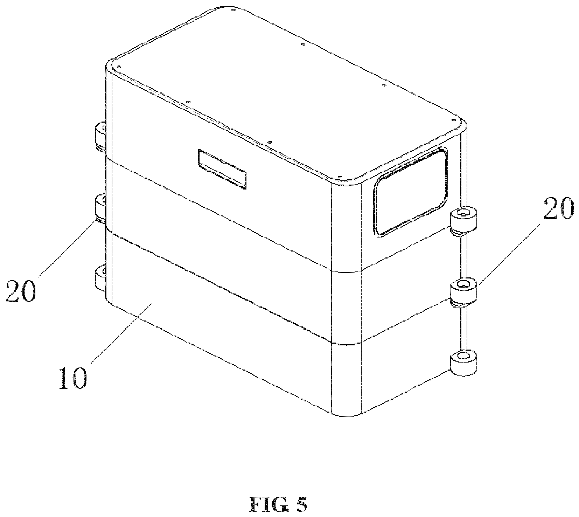

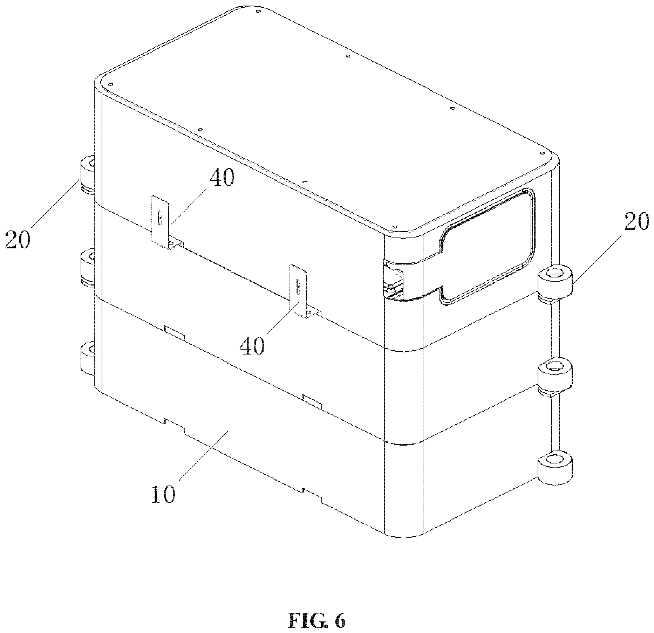

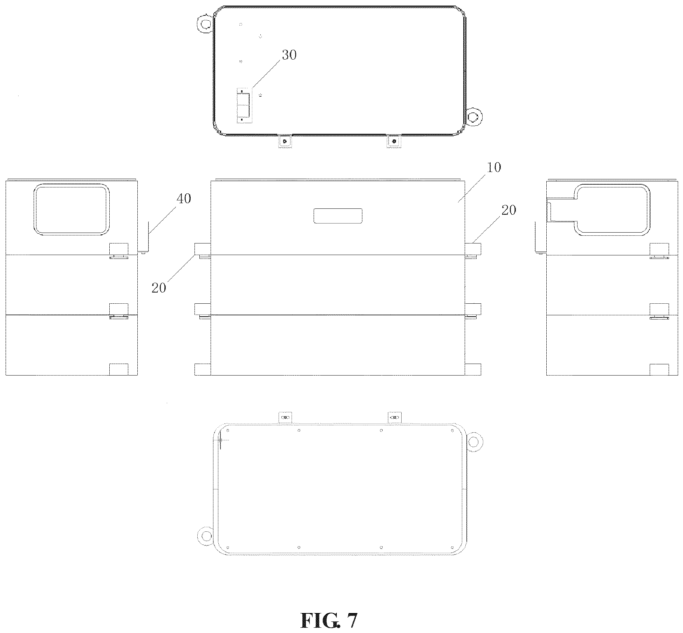

In actual application, the position-limiting between adjacent power supply modules 10 can be obtained in a corresponding direction through the corresponding first structural member 20, and all of the power supply modules 10 can be fixed through the second structural members 40. As shown in FIGS. 1 to 4, the stacking assembly can be carried out quickly. Alternatively, the first structural member 20 may be configured to fix adjacent power supply modules 10 in the corresponding direction, as shown in FIGS. 5 to 7 in which the power supply module 10 being vertically stacked in the vertical direction is shown as an example. FIG 5 shows the stacked power supply modules of three dimensional view from the front, FIG 6 shows the stacked power supply modules of three dimensional view from the back, FIG 7 shows views of the stacked power supply modules in all perspectives, where the topmost is the top view, the bottommost is the bottom view, and the view in the middle is a right view, a front view, and a left view, from left to right.

In the stacked power supply modules according to the embodiment, the power supply modules 10 are limited and/or fixed to each other in at least one direction through the corresponding first structural member 20 during the installation, which in turn reduces the relative displacement between the power supply modules 10 in a corresponding direction during the installation, reduces the risk of arc pulling or tipping, improves safety while reduces the installation steps and reduces the complexity of a fixing structure. Furthermore, the power supply modules 10 are limited and fixed in three directions by the first structural members 20 together with the second structural members 40, thereby enabling the securing and fixing of the stacked power supply modules in the three directions in post-installation and avoiding displacement after the installation. In the above embodiment, it is not necessary to perform a process of fixation of the power supply module at every time of installation, thereby avoiding the problems of the complex fixing structure and the cumbersome installation process in the conventional technology.

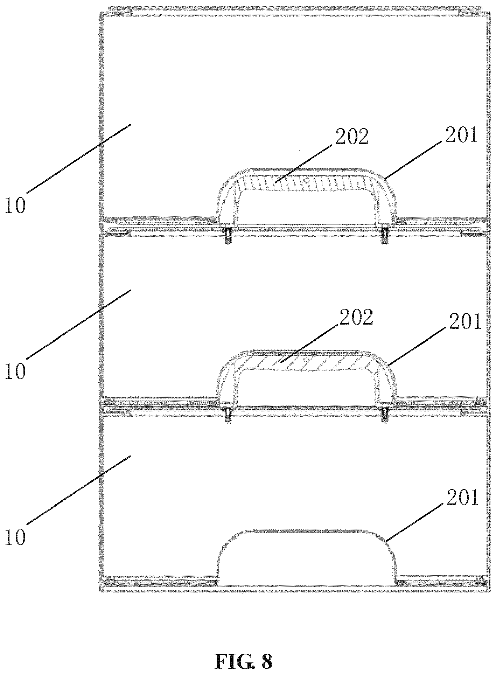

On the basis of the above embodiment, in the stacked power supply modules according to the present embodiment, the first structural member 20 may be a concave-convex matched fitting structure. FIG. 8 shows a cross-sectional view of the structure shown in FIG. 1, which is illustrated by the fact that a part, provided on a lower surface of the power supply module 10, of the first structural member 20 is a slot 201 and a part, provided on an upper surface of the power supply module 10 is a protruded handle 202. The protruded handle 202 can not only be used to achieve the limitation between two adjacent power supply modules 10, but can also facilitate the transportation of the power supply modules 10 by operator. In actual application, the two parts of the concave-convex matched fitting structure may also be shaped in other ways, not limited to the one shown in the figures, as long as one of the parts includes a lifting member, i.e., facilitate of the transportation. Alternatively, the first structural member 20 may be a shaft-hole matched fitting structure (as shown in FIGS. 5 to 7), which can be implemented in a form that depends on the application situations and is not limited here. In actual application, two forms of first structural members may be provided between the power supply modules 10, without limitation here, depending on specific application situations.

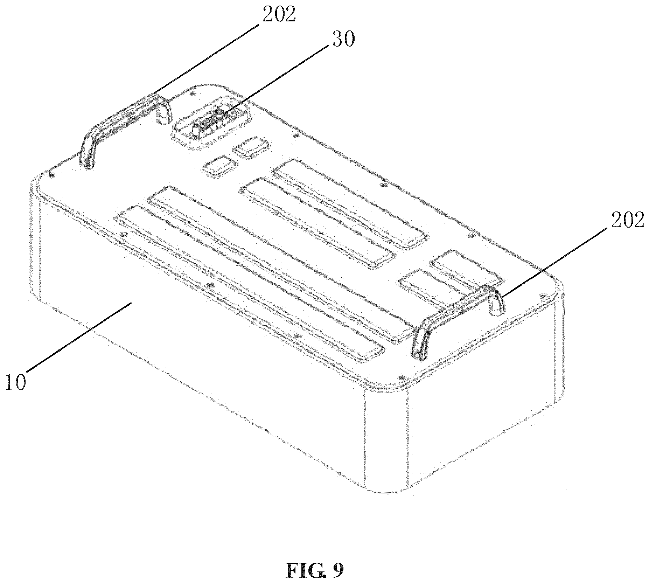

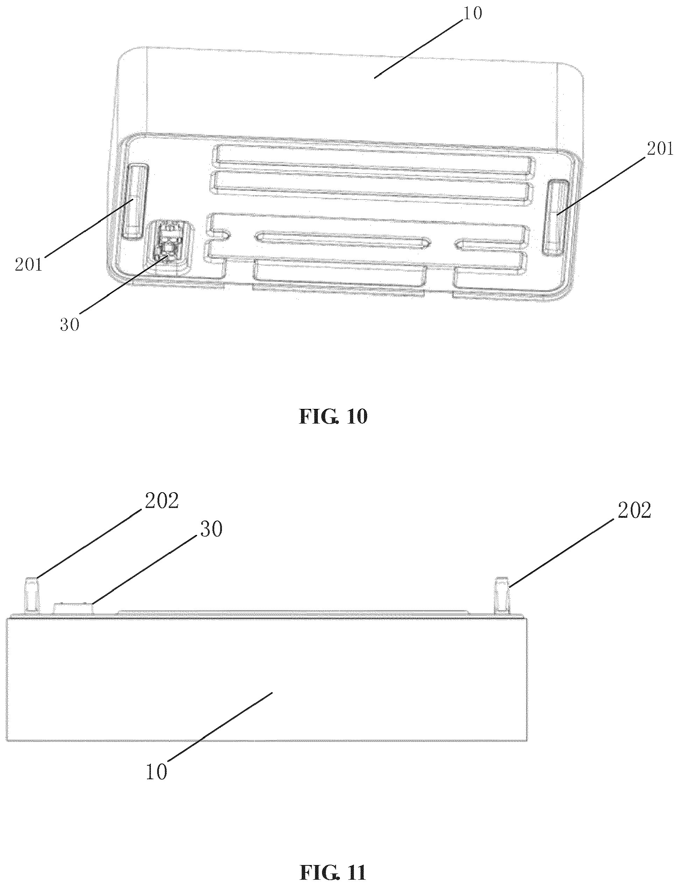

It should be noted that the power supply modules 10 at two ends after being stacked may have the same structure as that of the power supply modules 10 in the middle (as shown in FIG 9 or FIG 10), allowing for indiscriminate production and purchasing of the power supply modules 10, except that a part of the first structural member 20 thereof is spare. For example, the part located on the upper surface of a top power supply module 10 and the part located on the lower surface of a bottom power supply module 10 when stacked vertically up and down are not required to be used in conjunction with another part on the other power supply modules 10. Alternatively, the power supply modules 10 at the two ends after being stacked may have a different structure with that of the power supply modules 10 at the middle, as shown in FIGS. 1 and 8, an upper surface of the power supply module 10 located at the top when stacked vertically up and down is not provided with a corresponding protruded handle; and an lower surface of the power supply module 10 located at the bottom may be provided with a corresponding slot (as shown in FIG 8), which does not affect the stacking, or the lower surface may be not provided with a corresponding slot, which depends on specific application situations, and falls within the scope of protection of the present application.

Alternatively, a part, provided on the power supply module 10, of the first structural member 20 may be in an integral structure with the corresponding power supply module 10, that is, the part is provided on a body of the power supply module 10; or, the part and the power supply module 10 may be discrete structures connected to each other, i.e., the part is provided separately.

In actual application, at least two (shown as two in FIGS. 1 to 10) first structural members 20 may be provided between adjacent power supply modules 10 and are provided at different edges of the power supply modules 10, such as edges of two short sides of the power supply modules 10 shown in the Figures, which is not limited here.

FIGS. 8 to 14 show the first structural member 20 being a concave-convex matched fitting structure as an example, the case of the shaft-hole matched fitting structure is similar and will not be repeated and shown in detail. In actual application, the first structural member 20 may be realized by other forms such as a snap-fit structure, which is not limited here. Regardless of the structure of the first structural member 20, the adjacent power supply modules 10 can always be limited and/or fixed in a corresponding direction by the shape-fitting and size-fitting as well as by the setting of the number and position of the first structural member 20 between two parts of the adjacent power supply modules 10.

On the basis of the above embodiments, in the stacked power supply modules according to the embodiment, the power supply modules 10 may share all of the second structural members 40, as shown in FIGS. 1 to 4, the power supply modules 10 share two second structural members 40 on the top. All of the power supply modules 10 are fixed in the vertical direction through the two second structural members 40 on the top, after all of the power supply modules 10 have been quickly stacked.

Alternatively, the power supply modules 10 may be divided in groups and the power supply modules in one group share the corresponding second structural members 40. For example, every two or more power supply modules 10 are divided in one group together and share at least one corresponding second structural member 40. Alternatively, each of the power supply module 10 is provided with a corresponding second structural member 40, that is, each power supply module 10 may be provided with a corresponding second structural member 40 for fixing the power supply module 10. In this case, although the number of the second structural members 40 is relatively greater, the installation of the second structural members 40 can still be performed after all the power supply modules 10 have been stacked, which can still avoid the fact of having to fix each power supply module after the installation thereof, thereby avoiding the problems of the complex fixing structure and the cumbersome installation process in the conventional technology.

Specifically, in a case that the power supply modules 10 share the second structural members 40, the second structural members 40 may be provided at one end (as shown in FIGS. 1 to 7) or two ends (not illustrated) of the stacking direction of the power supply modules 10. That is, the second structural member 40 is provided at one end or both ends in the third direction, in order to limit and fix all the power supply modules 10. In addition, in this case, the second structural member 40 may be provided at the outermost, i.e., a free end of the stacking direction (as shown in FIGS. 1 to 4) or the second outermost (as shown in FIGS. 5 to 7) power supply module 10 in the stacking direction of the power supply modules 10.

In addition, similar to the first structural member 20, the second structural member 40 may be in an integral structure with a corresponding one of the power supply modules 10, or, in a discrete structure connected to each other, depending on specific application situations, which fall within the scope of protection of the present application.

In actual application, one end of the second structural member 40 is connected to the corresponding power supply module 10 and the other end of the second structural member 40 may be mechanically connected to a support structure so as to limit and fix all the power supply modules 10. The support structure may be an external structural member, a wall, or the like, which is not limited here.

In the stacked power supply modules according to the embodiment, the power supply modules 10 are stacked in a horizontal or vertical direction, and two adjacent power supply modules 10 are limited or fixed in one or two directions through the first structural members 20. The second structural member 40 is provided on the outermost power supply module 10 of the stacked power supply modules so as to limit and fix all the power supply modules 10 in a second and/or third direction. In other words, the power supply modules 10 can be limited and fixed in three directions through the second structural members 40 together with the first structural members 20.

On the basis of the above embodiments, electrical connection between the power supply modules 10 in the stacked power supply modules according to the present embodiment includes: connection for electric energy flow and connection for signal flow.

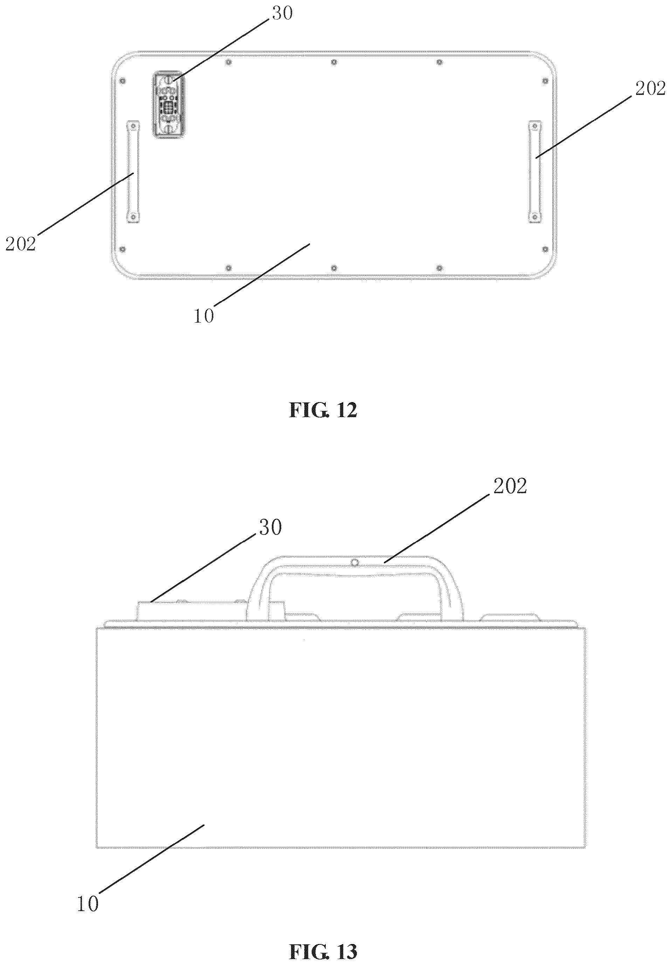

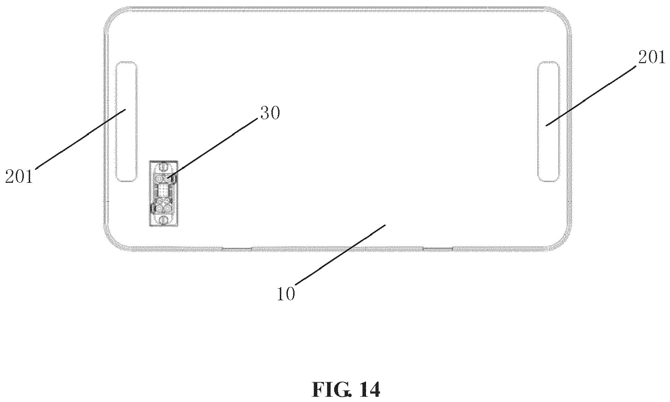

Referring specifically to FIGS. 9 and 10, the power supply modules 10 are electrically connected to each other by means of a corresponding electrical connection interface structural member 30, and when the power supply modules 10 are stacked vertically in the vertical direction, an upper surface and a lower surface of a power supply module 10 located in the middle portion may be provided with two electrical connection interface structural members 30, respectively, and when adjacent power supply modules 10 are stacked, two electrical connection interface structural member 30 on the lower surface of an upper power supply module 10 (as shown in FIG 10) can realize the electrical connection. FIG 11 is a front view of the power supply module 10, FIG 12 is a top view of the power supply module 10, FIG 13 is a right view of the power supply module 10, and FIG 14 is a bottom view of the power supply module 10.

It should be noted that end surfaces of the power supply modules 10 at two ends after being stacked, such as the upper surface of the top power supply module 10 and the lower surface of the bottom power supply module 10 when being stacked vertically, can be not provided with the corresponding electrical connection interface structural member 30, or, a corresponding electrical connection cover plate may be used to form a corresponding electric path between the power supply modules 10, which is not limited, depending on specific application situations.

In actual application, the electrical connection between the power supply modules 10 may be achieved by means of hot-plugging or cold-plugging, depending on application situations, which fall within the scope of protection of the present application.

Alternatively, the electrical connection between the power supply modules 10 may be sequential, i.e., adjacent power supply modules 10 are electrically connected to each other. For example, a first power supply module 10 is electrically connected to a second power supply module 10, and the second power supply module 10 is electrically connected to a third power supply module 10. Alternatively, the power supply modules 10 may be electrically connected in a spanning manner, i.e., the power supply modules are electrically connected at intervals, for example, the first power supply module 10 is electrically connected to the third power supply module 10, and the second power supply module 10 is electrically connected to a fourth power supply module 10. It is sufficient to provide each of the power supply modules 10 with a corresponding electrical connection interface structural member, which is not limited here and may be determined according to actual application situations.

Some specific examples of the electrical connection between the power supply modules 10 are provided in this embodiment, which are not limited. It is sufficient to realize the connection of the energy flow and the signal flow between the power supply modules 10, which fall within the scope of protection of the present application.

By means of the above principles, the stacked power supply modules enables the structural connection and the electrical connection between the power supply modules 10 to enable to perform corresponding storage function as well as charging and discharging functions. Furthermore, the module structure of the stacked power supply modules is simplified and the waterproofing requirements are significantly reduced. In addition, the stacked power supply modules have fewer fixing connection points for module installation compared to the conventional technology, allowing for reliable connection and fewer installation steps.

The same and similar parts between the various embodiments in the description may be referred to each other, and each embodiment focuses on differences from other embodiments. In particular, for systems or the system embodiments, since they are basically similar to the method embodiments, the description is relatively simple. Reference may be made to parts of the description of the method embodiments for relevant parts. The systems and the system embodiments described above are only illustrative, and units described as separate components may or may not be physically separated, and the components shown as units may or may not be physical units, that is, they may be located in one place or distributed on multiple network units. Some or all modules may be selected according to actual needs to achieve the object of the solutions of the embodiments. Those skilled in the art can understand and implement without creative efforts.

Professionals can further realize that units and algorithm steps of the examples described in conjunction with the disclosed embodiments herein can be implemented by electronic hardware, computer software, or a combination of the two. In order to clearly illustrate the interchangeability of hardware and software, components and steps of the examples have been generally described in terms of functions in the above description. Whether the functions are executed by hardware or software depends on specific applications and design constraints of the technical solutions. Professional technicians may use different methods to implement the described functions for each specific application, but such implementation should not be considered beyond the scope of the present application.

For the above description of the disclosed embodiments, features described in the embodiments of the description may be interchanged or combined, so that those skilled in the art can implement or use the present application. Various modifications to the embodiments are apparent to those skilled in the art. General principles defined herein may be implemented in other embodiments without departing from spirits or scopes of the present application. Therefore, the present application is not limited to the embodiments shown herein, but is subject to the widest scope consistent with the principles and novel features disclosed herein.

## Claims

1. A stacked power supply modules, comprising:
at least two power supply modules, at least one first structural member and at least one second structural member, wherein
the power supply modules are stacked;
any two adjacent power supply modules of the at least two power supply modules are limited and/or fixed in at least one direction through the corresponding first structural member;
the at least two power supply modules are limited and/or fixed in at least one other direction through the second structural members; and
the at least two power supply modules are limited and/or fixed in three directions through the first structural members together with the second structural members.

2. The stacked power supply modules according to claim 1, wherein each of the first structural members comprises a concave-convex matched fitting structure or a shaft-hole matched fitting structure.

3. The stacked power supply modules according to claim 1, wherein a part, provided on the power supply module, of each of the first structural members is in an integral structure with the power supply module or in a discrete structure interconnected with the power supply module.

4. The stacked power supply modules according to claim 1, wherein a part, provided on the power supply module, of each of the first structural members comprises a lifting member.

5. The stacked power supply modules according to any one of claims 1 to 4, wherein the at least two power supply modules share all the second structural members; or
the at least two power supply modules are divided in groups and the power supply modules in one group share a corresponding second structural member; or
each of the at least two power supply modules is provided with a corresponding second structural member.

6. The stacked power supply modules according to claim 5, wherein in a case that the at least two power supply modules share the second structural members, the second structural members are provided at one end or both ends of the power supply modules in a stacking direction, and/or,
the second structural members are provided on an outermost or second outermost power supply module of the at least two power supply modules in a stacking direction.

7. The stacked power supply modules according to any one of claims 1 to 4, wherein each of the second structural members is in an integral structure with a corresponding power supply module or in a discrete structure interconnected with the power supply module.

8. The stacked power supply modules according to any one of claims 1 to 4, wherein the other end of each of the second structural members is mechanically connected to a support structure;
wherein the support structure is an external structural member or a wall.

9. The stacked power supply modules according to any one of claims 1 to 4, wherein electrical connection between the at least two power supply modules comprises: connection for electric energy flow and connection for signal flow;
wherein the electrical connection between the at least two power supply modules is realized by means of hot-plugging or cold-plugging; and
wherein the electrical connection between the at least two power supply modules is a sequential connection or a spanning connection.

10. The stacked power supply modules according to any one of claims 1 to 4, wherein the at least two power supply modules are stacked in a vertical or horizontal direction.
